# EUROPÄISCHE PATENTSCHRIFT

(11) **EP 0 928 529 B1**
(45) Veröffentlichungstag und Bekanntmachung des Hinweises auf die Patenterteilung: **25.06.2008**
(21) Anmeldenummer: 97909155.0
(22) Anmeldetag: 18.09.1997
(51) Int. Cl.: H04L 29/06, G06F 9/46

(54) **VERFAHREN UND EINRICHTUNG ZUR INTEGRATION VERTEILTER TELEMATIKANWENDUNGEN ÜBER VERSCHIEDENE TELEKOMMUNIKATIONSWEGE**
METHOD AND DEVICE FOR INTEGRATING DISTRIBUTED TELEMATIC APPLICATIONS OVER A PLURALITY OF TELECOMMUNICATION CHANNELS
PROCEDE ET DISPOSITIF D'INTEGRATION D'APPLICATIONS TELEMATIQUES REPARTIES PAR DIVERSES VOIES DE TELECOMMUNICATION

(30) Priorität: 18.09.1996 DE 19638071
(43) Veröffentlichungstag der Anmeldung: 14.07.1999
(73) Patentinhaber: T-Mobile Deutschland GmbH, 53227 Bonn (DE)
(72) Erfinder: MÄTHNER, Nils, D-53125 Bonn (DE); RÖMER, Stefanus, D-53844 Troisdorf (DE)
(74) Vertreter: Riebling, Peter
(86) Internationale Anmeldenummer: PCT/DE1997/002116
(87) Internationale Veröffentlichungsnummer: WO 1998/012851

(56) Entgegenhaltungen:
- EP-A- 0 412 232
- EP-A- 0 600 235
- EP-A- 0 751 656

## Beschreibung

Die Erfindung betrifft ein Verfahren zur Integration verteilter Telematikanwendungen über verschiedene Telekommunikationswege.
Bisher wurden Telematikanwendungen isoliert und unabhängig voneinander realisiert. Dies hat zur Folge, daß die Telematikanwendungen die Schnittstelle zu dem jeweiligen Telekom munikationsweg direkt bedienen müssen und somit in den Telematikanwendungen Informationen über die Spezifika der verschiedenen Telekommunikationswege vorhanden sein müssen. Hierdurch wird die Komplexität der Telematikanwendung mit jeder Integration neuer Telekommunikationswege erhöht und die Flexibilität eingeschränkt. Andererseits wird durch die bisherige,isolierte Betrachtungsweise bzw. Realisierung eine Integration von Telematikanwendungen und eine gemeinsame Nutzung anwendungsübergreifender Systemresourcen verhin dert. Für jede Telematikanwendung müssen die Spezifika der genutzten Telekommunikationswege erneut realisiert werden, was die Komplexität und den Aufwand zusätzlich erhöht.

Aus der EP-A-0 412 232 ist eine Vorrichtung und ein Verfahren bekannt, das auf einen erleichterten Datenaustausch zwischen verschiedenen Softwareprozessen abzielt. Das Kommunikationsinterface umfasst zwei Bibliotheken von Programmen. Eine Bibliothek verwaltet selbstbeschreibende Formulare, welche die auszutauschenden aktuellen Daten enthalten, sowie Informationen über Datenformat und Datentyp. Die andere Bibliothek verwaltet den Datenaustausch und beinhaltet eine Umsetzeinrichtung, die den Informationsaustausch zwischen den entsprechenden Softwareprozessen und Diensten steuert. Das hier beschriebene Verfahren dient zum Entkoppeln einer Softwareanwendung von einer anderen Softwareanwendung. Dadurch wird ein Datenaustausch zwischen verschiedene Softwareanwendungen erleichtert.

Die Aufgabe, die mit dem erfindungsgemässen Verfahren gelöst wird, besteht darin, verschiedene Telekommunikationswege und verschiedene anwendungsübergreifende Prozeduren für ein breites, inhomogenes und dynamisches Spektrum von Telematikanwendungen an zentraler Stelle verfügbar zu machen bzw. wahrzunehmen und gleichzeitig von den Spezifika der Telekommunikationswege bzw. der Telematikanwendungen zu abstrahieren, um eine Integration von Telematikanwendungen über verschiedene Telekommunikationswege zu ermöglichen.

Diese Aufgabe wird durch die Merkmale der Patentansprüche gelöst.

Der Vorteil der Erfindung ist eine deutlichen Reduktion der Komplexität und des Realisierungsaufwandes des Gesamtsystems und gleichzeitig eine Erhöhung der Flexibilität für zukünftige Modifikationen und Erweiterungen.

Das Verfahren ist dadurch gekennzeichnet, daß Aufträge, die über eine Endeinrichtung des Teilnehmers zur Inanspruchnah me von Telematikanwendungen initiiert worden sind, von einer Integrationseinrichtung entgegengenommen, verwaltet, kommissioniert, zugestellt und verrechnet werden. Hierzu werden die Parameter, die in jedem entgegengenommen Auftrag enthalten sind ausgewertet, wohingegen die Nutzinformationen eines Auftrages transparent, d.h. für die zentrale Integrationseinrichtung nicht lesbar und ohne verändert zu werden, an die diesen Parametern zugeordneten Telematikanwendungen bzw. anwendungsübergreifende Prozeduren zur Leistungserbringung weitergereicht.

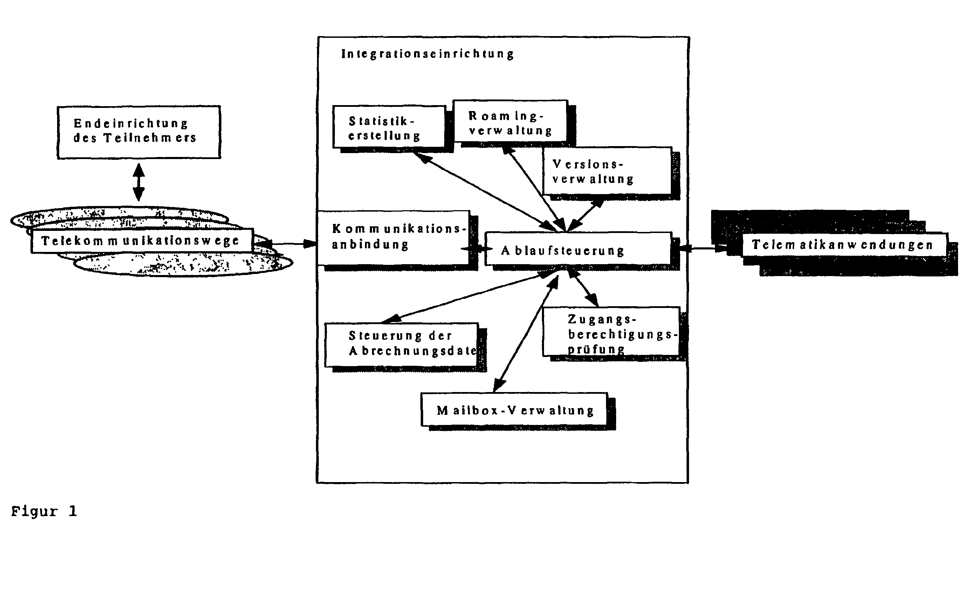

Figur 1 zeigt eine mögliche Realisierung der Integrationseinheit. In diesem Beispiel sind die Einheiten zur Wahrneh mung von telematikanwendungsübergreifende Prozeduren logisch abgrenzbar. Zentrale anwendungsübergreifende Prozeduren sind beispielsweise Ablaufsteuerung, Zugangsberechtigungsprüfung, Steuerung der Abrechnungsdaten, Versionsver waltung, Kommunikationsanbindung, Statistikenerstellung, Mailbox-Verwaltung, Roaming-Verwaltung. Diese Prozeduren werden in Abhängigkeit von auftragsbezogenen, anwendungsbezogenen und bestimmten in der Integrationseinrichtung vorgegebenen Steuerparametern ausgewählt und wahrgenommen. Die Auswahl und Ansteuerung des zu nutzen Telekommunikationsweges erfolgt ebenfalls in Abhängigkeit von auftragsbezogenen, anwendungsbezogenen und bestimmten in der Integrationseinrichtung vorgegebenen Steuerparametern. In Abhängig keit von diesen Steuerparametern können sich daher bei der Abwicklung jedes Auftrages jeweils andere Abläufe ergeben. Die Einheit zur Ablaufsteuerung stellt für alle Aufträge, die über eine Endeinrichtung des Teilnehmers zur Inan spruchnahme von Telematikanwendungen initiiert worden sind, sicher, daß zur Erbringung der von diesen Aufträgen geforderten Leistungen alle erforderlichen Teilleistungen in Abhängigkeit von den jeweiligen Steuerparameter beschafft und kommissioniert werden, sofern hierzu die nötige Berechti gung vorliegt. Jeder Auftrag beinhaltet auftrags- und anwendungsbezogene Steuerparameter und von diesen getrennte Nutzinformationen: Von der Einheit zur Ablaufsteuerung wer den nur die Steuerparameter eines Auftrages ausgewertet. Die Nutzinformationen werden transparent, d.h. ohne daß diese für die Ablaufsteuerung lesbar sind oder verändert werden, zur jeweiligen Zielanwendung weitergeleitet werden. Die Einheit zur Zugangsberechtigungsprüfung überprüft die Berechtigung eines von der Einheit zur Ablaufsteuerung an genommenen Auftrags mit Hilfe der Steuerparameter (z.B. Teilnehmeridentifikation) auf Zulässigkeit der geforderten Leistungen nach vorgegebenen Regeln, d.h. sie kann die Freigabe der geforderten Leistungen erteilen oder verweigern.
Die Einheit zur Steuerung der Abrechnungsdaten kann nach Auftragsbeendigung und erfolgter Leistungsbereitstellung ein Abrechnungsdatensatz nach Maßgabe der Steuerparameter erstellen.
Die Einheit zur Versionsverwaltung kann anhand einer Versi onskennung, die ein Bestandteil der anwendungsbezogenen Steuerparameter aller von der Einheit zur Ablaufsteuerung angenommener Aufträge ist, erkennen, ob von diesen Aufträgen Leistungen bzw. Teilleistungen einer älteren Version gefordert werden. Sie benachrichtigt die Endeinrichtung des Teilnehmers zur Inanspruchnahme von Telematikanwendungen, falls von den Aufträgen, die über diese Endeinrichtung iniitiert wurden, Leistungen bzw. Teilleistungen einer älteren Version gefordert werden..
Die Einheit zur Statistikerstellung kann mindestens folgende statistische Kenngrößen während des Betriebs erstellen:
- kürzeste, durchschnittliche, längste Antwortzeit für Aufträge
- kürzeste, durchschnittliche, längste Antwortzeit für Aufträge, untergliedert nach den geforderten Leistungen
- Durchsatz
- Anzahl Transaktionen pro Auftrag
- Datenmenge pro Transaktion
Die Einheit zur Mailbox-Verwaltung kann alle von von der Einheit zur Ablaufsteuerung angenommenen Aufträgen geforderten Leistungen und Teilleistungen in eine auftragsbezogene Mailbox ablegen. Die Einträge in dieser Mailbox können hieraus von den Endeinrichtung des Teilnehmers zur Inanspruchnahme von Telematikanwendungen, die diese Aufträge initiiert haben, im direkten oder sequentiellen Zugriff gelesen werden.
Von der Einheit zur Roaming-Verwaltung können den Endeinrichtung des Teilnehmers zur Inanspruchnahme von Telematikanwendungen, die einen Auftrag an diese Einheit zur Roaming-Verwaltung initiiert haben, alle notwendigen Systemparameter zur Inanspruchnahme von Leistungen fremder Telematikzentralen mitgeteilt werden.

## Patentansprüche

1. Verfahren zur Integration verteilter Telematikanwendungen über verschiedene Telekommunikationswege ,
**dadurch gekennzeichnet,**
**daß** die verschiedenen Telematikanwendungen über eine einheitliche Schnittstelle einer neuen zusätzlichen Integrationseinrichtung an unterschiedliche Telekommunikationswege angebunden werden,
**daß** von der Integrationseinrichtung Aufträge empfangen werden, die anwendungsspezifische Telematik-Anwendungsdaten sowie anwendungsübergreifende, den Anwendungsdaten zugeordnete Parameter enthalten,
**daß** die Parameter in speziell dafür vorgesehenen Einheiten welche in der Integrationseinrichtung angeordnet sind, ausgewertet werden,
**daß** in Abhängigkeit von dem Inhalt der Parameter die Auswahl und Ansteuerung von Telekommunikationswegen und anwendungsübergreifenden Prozeduren erfolgt, und die Anwendungsdaten transparent, ohne von der zentralen Integrationseinrichtung gelesen oder verändert zu werden, an die diesen Parametern zugeordneten Telematikanwendungen bzw. anwendungsübergreifenden Prozeduren weitergereicht werden.

2. Verfahren nach Patentanspruch 1 , **dadurch gekennzeichnet daß** die anwendungsbezogenen und auftragsbezogenen Parameter ausgewertet und in Abhängigkeit von in der Integrationsein heit vorgegebenen Auswertekriterien die Auswahl und An steuerung von Telekommunikationswegen und anwendungsüber greifenden Prozeduren erfolgt.

3. Verfahren nach einem der Patentansprüche 1 oder 2, da durch **gekennzeichnet**, daß die Auswahl des Telekommunikati onsweges vom Wert eines Teils der anwendungsbezogenen Para meter abhängt, und daß dieser Wert eine Typisierung des Te lekommunikationsweges mindestens nach Datenvolumen und/oder Zustellzeit beinhaltet.

4. Einrichtung zur Durchführung der einzelnen Schritte des Verfahrens gemäß einem der Patentansprüche 1 - 3 , **dadurch gekennzeichnet,**
**daß** eine Integrationseinheit vorhanden ist, die zwischen der einheitlichen Schnittstelle für Telematikanwendungen und mindestens einem Telekommunikationsweg angeordnet ist, wobei die Integrationseinheit umfasst:
eine Einheit zum Empfang von Aufträgen, die anwendungsspezifische Telematik-Anwendungsdaten sowie anwendungsübergreifende Parameter, die den Anwendungsdaten zugeordnet sind, enthalten,
mindestens eine Einheit zur Auswertung der anwendungsübergreifenden Parameter, und
Einheiten zur Auswahl und/oder Ansteuerung der anwendungsübergreifenden Prozeduren und/oder Telekommunikationswege in Abhängigkeit von dem Inhalt der Parameter.

## Claims

1. Method for the integration of distributed telematic applications over different telecommunications channels, **characterised**
**in that** the different telematic applications are linked to different telecommunications channels by a standard interface of a new additional integration device,
**in that** from the integration device are received jobs which contain application-specific telematic application data and inter-application parameters assigned to the application data,
**in that** the parameters are evaluated in units which are specially designed for this purpose and arranged in the integration device,
**in that** the selection and control of telecommunications channels and inter-application procedures are effected as a function of the content of the parameters, and the application data are forwarded transparently, without being read or altered by the central integration device, to the telematic applications assigned to these parameters or inter-application procedures.

2. Method according to claim 1, **characterised in that** the application-related and job-related parameters are evaluated, and the selection and/or control of telecommunications channels and inter-application procedures are effected as a function of evaluation criteria preset in the integration unit.

3. Method according to one of claims 1 or 2,
**characterised in that** selection of the telecommunications channel depends on the value of some of the application-related parameters, and **in that** this value contains a typification of the telecommunications channel at least according to data volume and/or delivery time.

4. Device for carrying out the individual steps of the method according to one of claims 1 - 3, **characterised**
**in that** there is an integration unit which is arranged between the standard interface for telematic applications and at least one telecommunications channel,
the integration unit including:
a unit for receiving jobs which contain application-specific telematic application data and inter-application parameters which are assigned to the application data,
at least one unit for evaluation of the inter-application parameters, and
units for the selection and control of the inter-application procedures and/or telecommunications channels as a function of the content of the parameters.

## Revendications

1. Procédé pour l'intégration d'applications télématiques réparties, par l'intermédiaire de différentes voies de télécommunication,
**caractérisé en ce que** les différentes applications télématiques sont reliées par l'intermédiaire d'une seule interface d'un dispositif d'intégration supplémentaire nouveau à différentes voies de télécommunication,
**en ce que** le dispositif d'intégration reçoit des ordres qui contiennent des données d'applications télématiques propres aux applications ainsi que des paramètres qui débordent des applications et qui sont associés aux données d'applications,
**en ce que** les paramètres sont analysés dans des unités qui sont prévues spécialement pour cela et qui sont disposées dans le dispositif d'intégration,
et **en ce que** la sélection et la commande des voies de télécommunication et des procédures débordant des applications se font en fonction du contenu des paramètres, et les données d'applications sont transmises de manière transparente, sans être lues ou modifiées par le dispositif d'intégration central, aux applications télématiques associées à ces paramètres ou aux procédures débordant des applications.

2. Procédé selon la revendication 1, **caractérisé en ce que** les paramètres relatifs aux applications et relatifs aux ordres sont analysés, et la sélection et la commande des voies de télécommunication et des procédures débordant des applications se font en fonction de critères d'analyse prédéfinis dans l'unité d'intégration.

3. Procédé selon la revendication 1 ou 2, **caractérisé en ce que** la sélection de la voie de télécommunication dépend de la valeur d'une partie des paramètres relatifs aux applications, et **en ce que** cette valeur contient un typage de la voie de télécommunication au moins d'après le volume de données et/ou de l'heure de distribution.

4. Dispositif pour exécuter les étapes individuelles du procédé selon l'une des revendications 1 à 3, **caractérisé en ce qu'**il est prévu une unité d'intégration qui est disposée entre l'interface unique pour les applications télématiques et au moins une voie de télécommunication, l'unité d'intégration comprenant :
une unité pour recevoir les ordres qui contiennent des données d'applications télématiques propres aux applications et des paramètres débordant des applications et associés aux données d'applications,
au moins une unité pour analyser les paramètres débordant des applications, et
des unités pour sélectionner et/ou commander les procédures débordant des applications et/ou les voies de télécommunication en fonction du contenu des paramètres.
